# EUROPEAN PATENT APPLICATION

(11) **EP 1 326 296 A1**
(43) Date of publication of application: **09.07.2003**
(21) Application number: 01958501.7
(22) Date of filing: 27.08.2001
(51) Int. Cl.: H01M 8/02

(54) **FUEL CELL UNIT AND ITS MANUFACTURING METHOD**

(30) Priority: 30.08.2000 JP 2000261919; 07.12.2000 JP 2000373318
(71) Applicant: SANYO ELECTRIC CO., LTD., Moriguchi-shi, Osaka 570-0083 (JP)
(72) Inventor: CHIKANO, Yoshito, Oura-gun, Gunma 370-0532 (JP); YONEZU, Ikuo, Hirakata-shi, Osaka 573-0084 (JP); AKIYAMA, Yukinori, Ashikaga-shi, Tochigi 326-0143 (JP); MATSUBAYASHI, Takaaki, Oura-gun, Gunma 370-0516 (JP); TANIGUCHI, Shunsuke, Oura-gun, Gunma 370-0521 (JP)
(74) Representative: Glawe. Delfs. Moll
(86) International application number: JP0107300
(87) International publication number: WO02019454

(57) **Abstract**

A fuel cell unit having an electrolytic layer with a catalyst layer and a gas diffusion layer arranged in the stated order on each principal surface is provided. The electrolytic layer is composed of a porous sheet and an electrolytic gel impregnated therein. The electrolytic gel is gel particles made of a proton conductive material. At least one of the catalyst layer and the gas diffusion layer has pores that are smaller than the electrolytic gel particles.

## Description

### TECHNICAL FIELD

The present invention relates to a fuel cell unit and a manufacturing method thereof.

### BACKGROUND ART

Fuel cells have a unit construction in which an electrolytic layer is sandwiched between anode-side catalyst layers and cathode-side catalyst layers, which are sandwiched between two gas diffusion layers. When an anode gas containing hydrogen is supplied at the anode side and a cathode gas containing oxygen is (oxidizing gas) supplied at the cathode side, these hydrogen and oxygen are combined together to generate power. As a cathode gas, air is commonly used, while as an anode gas, a reformed gas containing ample hydrogen or a purity hydrogen gas is used. The reformed gases are formed by reforming fuel gases, such as natural gas, naphtha and other light carbon hydrogen, using fuel gas reformers (reformers, CO transformers and CO removers).

Among a variety of electrolytic layers used in fuel cells, solid polymer fuel cells, whose electrolytic layer is a solid polymer membrane made of cation exchange resin, are most widely used as a power source for vehicles, cellular phones and other outdoor equipment.

In recent years, there has been a research on the use of a proton conductive gel as an electrolytic layer for fuel cells. Japanese Laid-Open Patent Applications Nos. H8-249923 and H11-203936 teach that this proton conductive gel is a compound primarily composed of silicon oxide and Bronsted acid (principally phosphoric acid) and is made by a sol-gel transformation method. Fuel cells having such a proton conductive gel electrolytic layer can generate power at higher operating temperatures (150°C)than polymer electrolytic layer fuel cells or PEFCs (about 100 °C ) . Therefore, unlike conventional PEFCs, there is no need to cool down a hot reformed gas that has been generated by means of fuel cell reformers to a moderate operating temperature of a fuel cell (around 100°C). This is a great improvement in terms of power generation efficiency. In PEFCs, solid polymer films must be kept moist, in case the internal resistance should increase and the generation efficiency should drop accordingly. In contrast, since the proton conductive gel requires lesser amount of water for power generation than solid polymer films, a fuel cell of this type can stably generate power even at higher temperatures than PEFCs.

It is expected that most of the problems associated with PEFCs can be solved by employing such proton conductive gel as electrolytic layers.

However, there are several problems to be solved before using this proton conductive gel to produce superior electrolytic layers (membranes).

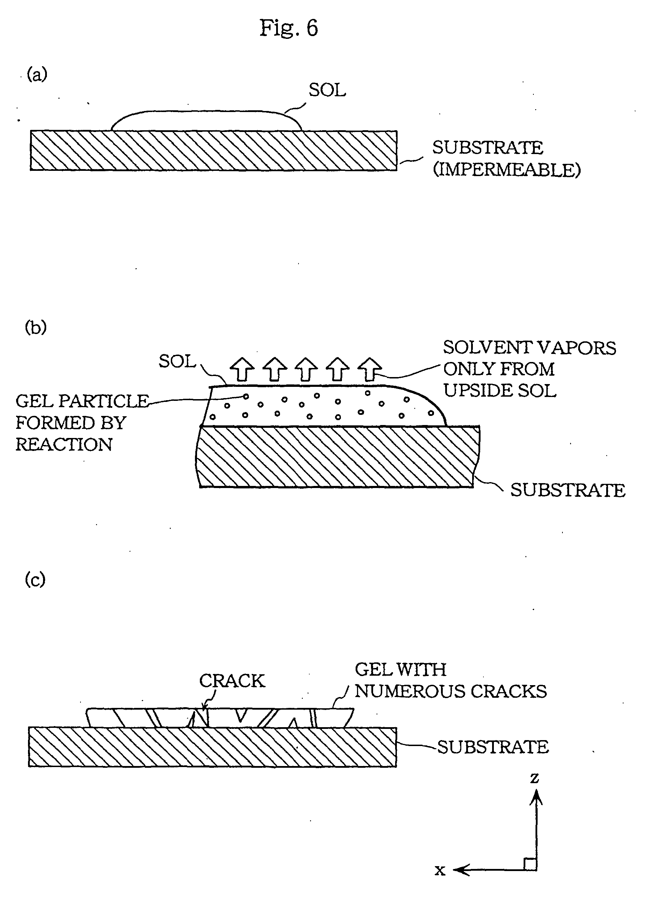

Fig. 6 (a)-(c) illustrate a conventional process of forming electrolytic gels. As shown herein, a solution (gel) containing a proton conductive material is applied to a substrate, such as glass plate and teflon plate (a). The solvent vapors while condensation polymerization takes place in the sol (b), and an electrolytic gel membrane is formed (c) . However, during the processes (b) and (c), the volume of the sol is reduced mainly at the surface due to the vaporization of the solvent. This puts an ununiform pressure on the electrolytic gel, causing a number of cracks in the electrolytic gel. These cracks formed in the electrolytic membrane would let pass increasing amounts of anode-gas and cathode-gas through and mix together during the operation of the fuel cell. This would reduce the generation efficiency of the fuel cell to a great extent.

In an attempt to solve the problems, Japanese Laid-Open Patent Application Nos. H8-249923, H10-69817 and H11-203936 disclose methods for increasing the strength of the gel by adding organic materials. Yet, it is still difficult to make electrolytic layers as thin and uniform as is required for standard electrolytic layers being 10 µm to 100 µm thick. It is particularly difficult to produce such electrolytic layers of large size so as to fit for use in fuel cells of large size.

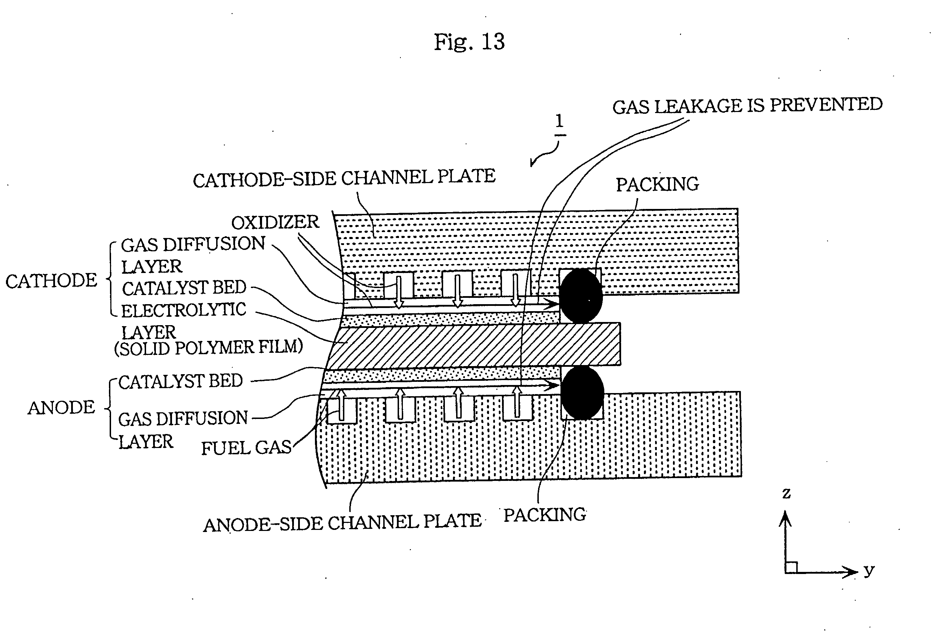

In typical fuel cells, an electrode (a catalyst layer and a gas diffusion layer) and a channel plate for distributing a gas are arranged on each principal surface of an electrolytic layer. In the case of conventional PEFC units, packings are provided in a space left between a principal surface of an electrolytic layer and a principal surface of a channel plate, surrounding their side surfaces, as illustrated by an enlarged view of a portion of a conventional unit cell (Fig. 13). These packings are provided to minimize the amount of gas escaping out of the cell.

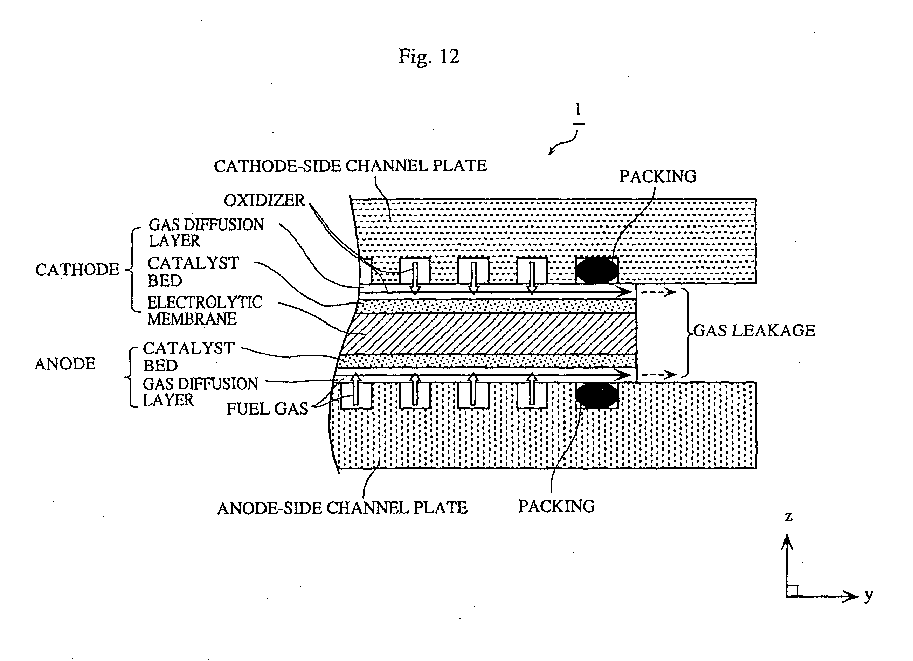

Attaching such packings to the electrolytic layer made of the proton conductive gel, however, involves a risk that the vitreous membrane may be broken. To avoid the damage on the membrane, packings in some fuel cells are provided between a gas diffusion layer and a channel plate, as shown in Fig. 12 illustrating a sectional view of a portion of a unit cell. Certainly, pressure put on the electrolytic layer is lowered with this arrangement, but this causes another problem that a gas escapes from the sides of the gas diffusion layers and the cathode beds (at both the cathode-side and anode-side). This problem has a serious impact on its efficiency and cost, and therefore needs to be solved quickly.

In view of the above problems, the present invention intends to provide a fuel cell that has an excellent electrolytic layer made of a proton conductive gel, and a manufacturing method thereof, so that the fuel cell can generate power with greater efficiency than conventional ones.

It is another object of the present invention to provide a fuel cell that has an excellent electrolytic layer made of a proton conductive gel, and a manufacturing method thereof, so that the fuel cell can prevent a possible gas leakage and generate power with greater efficiency than conventional ones.

### DISCLOSURE OF INVENTION

The above objects are fulfilled by a fuel cell unit having an electrolytic layer with a catalyst layer and a gas diffusion layer arranged on each principal surface in the stated order, characterized in that: the electrolytic layer is a porous sheet impregnated with an electrolytic gel, the electrolytic gel being gel particles made of a proton conductive material; and at least one of the catalyst layer and the gas diffusion layer has pores that are smaller than the electrolytic gel particles.

When at least one of the catalyst layer and the gas diffusion layer has the stated construction, a solvent of a solution containing a proton conductive material that is used for forming an electrolytic gel membrane permeates into and volatilize from either the catalyst layer or the gas diffusion layer. The electrolytic gel permeating into the catalyst layer or the gas diffusion layer does not fill the pores of the layers, nor float in the solution. The solvent accumulates on the catalyst layer or the gas diffusion layer instead, forming the electrolytic gel membrane. Therefore, the formed gel has a fine structure with a smaller number of cracks being formed.

With the electrolytic gel held in the porous sheet, the formed electrolytic membrane exhibits an excellent strength. Therefore, even a large-size electrolytic membrane does not suffer the formation of cracks.

In the above fuel cell unit, the proton conductive material may include (a) a material selected from the group consisting of SiO₂, Al₂O₃, TiO₂, V₂O₅ and ZrO₂, and (b) a material selected from the group consisting of phosphoric acid, perchloric acid, boric acid and silicic acid.

The above objects are also fulfilled by a manufacturing method for forming an electrolytic gel for use in a fuel cell, characterized in that: the electrolytic gel is formed by applying a solution containing a proton conductive material to a porous sheet.

In the above manufacturing method, the porous sheet may have pores that are smaller than electrolytic gel particles.

With this method, the solvent of the solution not only vaporizes from the surface of the solution, but also permeates into and vaporizes from the porous substrate. As the solvent vaporizes, the upward and downward forces that strain the electrolytic gel being formed in the solution are brought into balance, which helps lower the number of cracks formed in the gel.

The above objects are also fulfilled by a manufacturing method for manufacturing a fuel cell unit including a lamination step for laminating a catalyst layer and a gas diffusion layer, and an electrolytic gel layer forming step for forming an electrolytic gel layer by applying a solution containing a proton conductive material to the catalyst layer, characterized in that: in the lamination step, at least one of the catalyst layer and the gas diffusion layer is made of a material that has smaller pores than the electrolytic gel particles; and in the electrolytic gel layer forming step, the catalyst layer and the gas diffusion layer are laminated in the stated order on a formed electrolytic gel layer, to manufacture a cell unit.

The same effects can be achieved by using this method as when using the above manufacturing method for manufacturing the electrolytic gel. Also, when the catalyst layer and the gas diffusion layer are used as a porous substrate, it becomes possible to manufacture a fuel cell unit soon after an electrolytic gel is grown. This increases the yield in producing fuel cell units.

The above objects are also fulfilled by a manufacturing method for manufacturing a fuel cell unit, characterized in that: a porous sheet is inserted between two catalyst layers, and a gas diffusion layer is laminated on an outer surface of each catalyst layer, and the porous sheet is impregnated with a solution containing a proton conductive material, so that an electrolytic gel is grown and held in the porous sheet.

In the above manufacturing method, a solvent of the solution in the porous sheet may permeate into and vapor from the gas diffusion layer, the gas diffusion layer being composed of a substrate impregnated with carbon powder.

The above objects are also fulfilled by a fuel cell unit having an electrolytic layer that has a catalyst layer, a gas diffusion layer and a channel plate for distributing a gas laminated on each principal surface in the stated order, the fuel cell generating power when a fuel gas is distributed along one of the channel plates and an oxidizing gas is distributed along the other channel plate, characterized in that: the electrolytic layer contains a proton conductive gel; on at least one of the principal surfaces of the electrolytic layer, the catalyst layer and the gas diffusion layer are arranged so that their side surfaces are situated more inwardly than side surfaces of the electrolytic layer and the channel plates; and a seal member is applied to a side surface of the gas diffusion layer, or two or more seal members are applied to the side surfaces of the catalyst layers and the gas diffusion layers.

The seal members applied in this way can substantially reduce the amount of gases escaping from the sides of the catalyst layers and the gas diffusion layers that are in contact with the seal members. This makes it more feasible to lower costs and generate power with greater efficiency.

The seal member is made from a material that contains a proton conductive gel, the same material as used for the electrolytic membrane. Using this material increases the production efficiency, for the seal member and the electrolytic membrane can be formed at the same time.

In the above fuel cell unit, the seal member may be applied to at least specific side surfaces of the catalyst layers and the gas diffusion layers that are parallel to a pathway of the fuel gas in the channel plate.

This is shown by experiments conducted by inventors of the present application. The seal members should preferably be provided on the side surfaces of both the catalyst layers and the gas diffusion layers in order to prevent a gas leakage with great efficiency.

In the above fuel cell units, the proton conductive material may include (a) a material selected from the group consisting of SiO₂, Al₂O₃, TiO₂, V₂O₅ and ZrO₂, and (b) a material selected from the group consisting of phosphoric acid, perchloric acid, boric acid and silicic acid.

In the above fuel cell units, the electrolytic layer may be a porous sheet impregnated with the proton conductive gel.

### BRIEF DESCRIPTION OF THE DRAWINGS

Fig. 1 is a perspective view showing the construction of a fuel cell unit.
Fig. 2 is a sectional view showing a portion of an electrolytic layer and its neighborhood in a manufacturing process.
Fig. 3 is a sectional view showing a portion of a substrate on which an electrolytic layer gel is formed using a porous sheet.

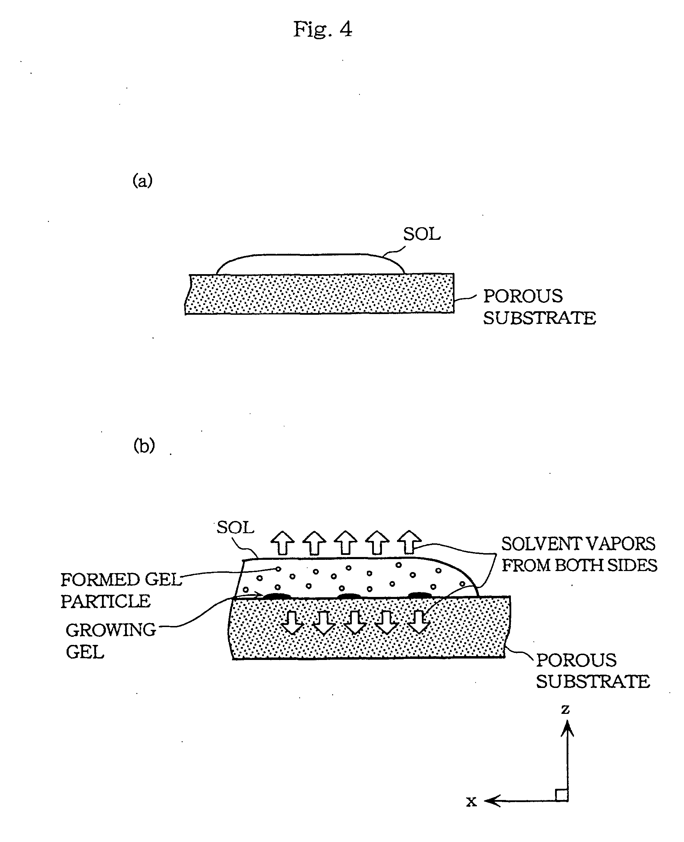

Fig. 4 is a sectional view showing a portion of a substrate illustrating a process of forming an electrolytic gel using a porous substrate.
Fig. 5 is a graph showing the performance of manufactured fuel cells.
Fig. 6 is a sectional view showing a portion of a substrate illustrating a process of forming an electrolytic gel using a non-permeable substrate.
Fig. 7 is a perspective view showing the construction of a fuel cell which is an embodiment of the present invention;
Fig. 8 is a sectional view of a fuel cell.
Fig. 9 is an enlarged sectional view showing an end portion of a unit cell.

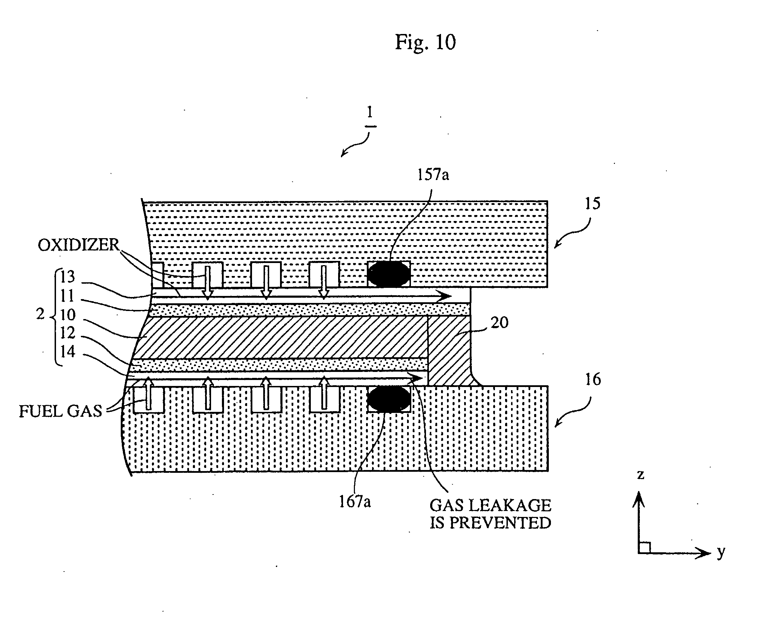

Fig. 10 is an enlarged sectional view showing an end portion of a unit cell (that is capable of preventing just an anode-gas leakage).
Fig. 11 is a graph showing the performance of fuel cells of actual examples and comparison examples.
Fig. 12 is an enlarged sectional view showing an end portion of a unit cell that has an electrolytic layer made of a proton conductive gel and packings provided between a gas diffusion layer and a channel plate.
Fig. 13 is an enlarged sectional view showing an end portion of a unit cell of a conventional PEFC.

### BEST MODE FOR CARRYING OUT THE INVENTION

### 1. First Embodiment

The following describes a fuel cell, which is a first embodiment of the present invention.

### 1-1. Construction of a Unit cell

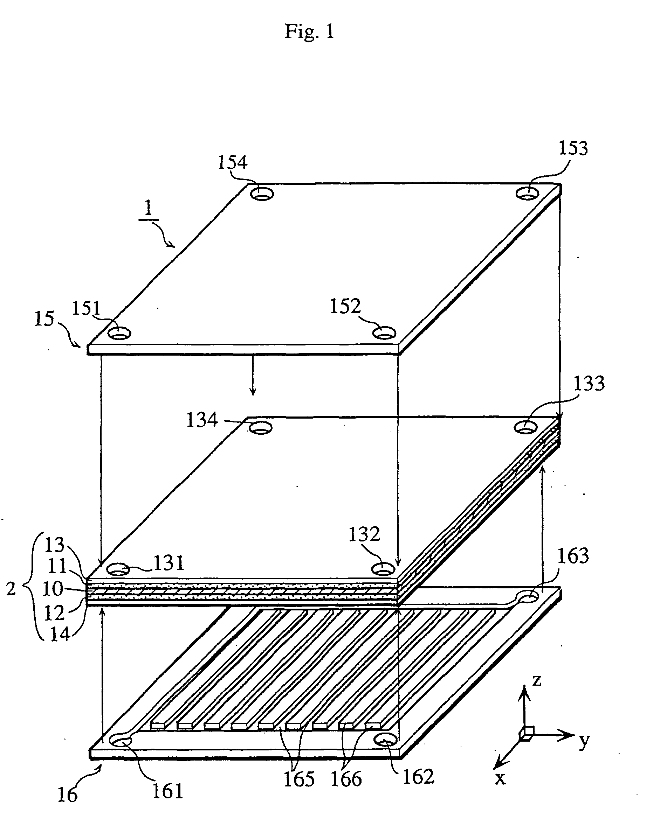

Fig. 1 is an lamination drawing of a fuel cell (unit cell 1) of the first embodiment. The unit cell 1 is provided with a cathode-side channel plate 15 and an anode-side channel plate 16, with an electrolytic layer 10 sandwiched in between. The electrolytic layer 10 has a cathode-side catalyst layer 11 and a cathode-side gas diffusion layer 13 laminated on one surface, and an anode-side catalyst layer 12 and an anode-side gas diffusion layer 14 laminated on the other surface, in the stated order. Of these, construction elements 10-14 are combined into a lamination 2.

The anode-side catalyst layer 12 and the cathode-side catalyst layer 11 are in the shape of a sheet and formed from a mixture of catalyst supporting powder (platinum supporting carbon powder) and PTFE.

The gas diffusion layers 13 and 14 are formed by applying a water-repellent resin (tetrafluoroethylene hexafluoropropylene copolymer, FEP) to a substrate, which is 200 µm thick (carbon paper). This makes it water repellent. Carbon powder is then supplied to the resulting layers. This gives a higher liquid permeability to the gas diffusion layers 13 and 14 than conventional gas diffusion layers, which are made of carbon paper that has acquired water repellent property. As will be described later, the construction of the gas diffusion layers is determined so that a solvent of a proton conductive solution can permeate into and volatilize from the layers during an electrolytic layer-forming process. The gas diffusion layers 13 and 14 are also called collector layers, because they serve to ensure that electric currency pass through the catalyst layers 11-12 and the channel plates 15-16.

Note that a cathode is composed of the cathode-side catalyst layer 11 and the gas diffusion layer 13, and an anode is composed of the anode-side catalyst layer 12 and the gas diffusion layer 14.

The anode-side channel plate 16 is formed by injection molding a mixture of carbon powder and a resinous material, such as phenol resin. Prallel ribs 166 are formed with some regular intervals on its surface facing the anode-side gas diffusion layer 14 (an undersurface in Fig. 1). They are arranged in the y direction, a direction orthogonal to x direction, when the x direction is a direction along the length. The intervals make channels 165 as a pathway for the anode gas (a purity hydrogen or a reformed gas containing ample hydrogen).

The cathode-side channel plate 15 is almost the same as the anode-side channel plate 16. Though not illustrated in Fig. 1, the cathode-side channel plate 15 has ribs on the surface facing the cathode-side gas diffusion layer 13 with some regular intervals. The ribs are arranged in the x direction, a direction orthogonal to the y direction, when the y direction is a direction along the length of this fuel cell. The intervals make channels as a pathway for the cathode gas (an oxidizer such as air).

The electrolytic layer 10 is the characteristic element in this embodiment. It is formed of a ceramic porous sheet and a proton conductive gel impregnated therein. The proton conductive gel contains silicon oxide and Bronsted acid (phosphoric acid), with a high density of hydroxy group (OH-) chemically bonded with the silicon oxide on its end surface. The silicon oxide is supported by the Bronsted acid.

The porous sheet is a non-woven fabric made of ceramic fibers . The proton conductive gel is filled in its pores for the sake of physical protection. Fewer cracks are formed during manufacturing process than those in conventional ones. Detailed explanation of the manufacturing method for the electrolytic layer 10 will be given later.

The construction elements 10-16 have apertures (Fig. 1 illustrates apertures 131-134, 151-154, 161-163) at the.four corners of a principal surface, forming manifolds in the unit cell 1. The anode-gas comes through apertures 151, 131 and 161 and other apertures which are arranged in series, and proceeds in the z direction towards the channels 165. The anode-gas goes out from apertures 163, 133 and 153 and other apertures which are arranged in series in the z direction. Similarly, the cathode-gas comes through the apertures 134 and 154 and other apertures which are arranged in series, and proceeds in the z direction towards the channels of the cathode-side channel plate 15. The cathode-gas goes out from apertures 162, 132 and 152 and other apertures which are arranged in series in the z direction.

To ensure high power generation, a plurality of cells 1 are stacked one against another, which are each sandwiched by a pair of partition plates. Both ends of the cell are fixed by means of a pair of end plates. Such a cell structure is called cell stack.

### 1-2. Operation of the Fuel Cell

During the operation of the fuel cell, a hydrogen gas (a reformed gas containing abundant hydrogen) as an anode gas and air as a cathode-gas are supplied. Hydrogen from the anode gas becomes a proton (H₂→2H⁺+2e⁻) when it arrives in the vicinity of the anode, and moves through the gel in the electrolytic layer towards the cathode-side catalyst layer 11. The proton combines with oxygen from the cathode gas to form water (2H⁺+2e⁻+1/2O₂→H₂O). Having such a proton conductive gel in its porous sheet, the fuel cell can generate power even when there is little water left in the electrolytic layer 10. In the proton conductive gel, protons of hydroxy groups of silicon oxide or phosphoric acid do hop together with the few water molecules to pass electric current. Such fuel cells can operate even in a dry atmosphere or at a high temperature, because the hydroxy groups and the little amount of water rarely leave a surface of the electrolytic layer 10. This feature is unique to this type of fuel cells, and not detected in PEFCs such as Nafion made by DU PONT. PEFCs require a lot of water to assume proton conductivity.

Formed of the porous sheet and the electrolytic gel impregnated therein, the electrolytic layer 10 in the first embodiment has a greater physical strength than conventional ones. This enables the unit cell 1 to continuously generate power in excellent condition, even when it is struck.

Compared with conventional electrolytic layers, there are fewer cracks formed in the electrolytic layer 10. This alleviates the problem of the anode-gas and cathode-gas getting through the cracks and being mixed during the operation. This improves the generation efficiency of the fuel cell.

### 2. Manufacturing the Fuel Cell (Lamination)

The following describes a method for manufacturing the layers of the fuel cell.

### 2-1. Manufacturing the Gas Diffusion Layer

In the present invention, it is necessary that a solvent of the proton conductive gel should permeate into and vapor from the gas diffusion layer. For this purpose, the gas diffusion layer is provided with so minute pores, about 10nm to 100nm wide, that particles of the proton conductive material solution cannot get through.

Firstly, a carbon paper impregnated with 16wt% of FEP is heated at 380°C for an hour to make it water repellent. A pasted mixture of carbon particles (having an average diameter of about 30mm) and PTFE is applied (at a ratio of 60wt% to 40wt%) to both surfaces of the carbon paper to fill the inside of the carbon paper. The carbon paper is then heated at 360°C for two hours. As a result, the resulting gas diffusion layer has minute pores of about 10nm to 100nm in diameter.

The gas diffusion layer may also be formed by mixing carbon particles and fluororesins such as PTFE with a ratio of 70wt% to 30wt%, and by rolling the mixture into a sheet-like form of about 100 µm thick.

### 2-2. Manufacturing the Catalyst layer

The catalyst layer (an electrode) is formed by mixing platinum supporting carbon powder with PTFE with a ratio of 70wt% to 30wt%. The catalyst layer is 20µm thick and in the shape of a sheet.

### 2-3. Making a Solution of a Proton Conductive Material

The following describes how to make a solution of a proton conductive material, which is used in forming the electrolytic layer.
1-a. Firstly, Si(OC₂H₅)₄ is mixed (hydrolised) with PO(OCH₃)₃, H₂O, C₂H₅OH and HCL (at a molar ratio of 1:0.04:1:1:0.0027).
1-b. Then, H₂O, C₂H₅OH and HCL (4:1:0.011: 1 Si(OC₂H₅)₄ mol) are added to the mixture, and they are stirred for an hour.
1-c. To the mixture, HCONH₂ is added as a gel inhibitor at a molar ratio of 12ml to 1 Si(OC₂H₅)₄ mol. They are stirred for an hour.
   As a result, the solution of a proton conductive material is produced. The solution can be transformed into proton conductive powder by taking the following process.
1-d. The solution is aired for a few days at room temperature (instead, the solution may be put in a dryhouse). The resulting lump is grinded with an agate mortar into proton conductive powder. Its particles have an average diameter of 1 µm.

### 2-4. Manufacturing a Unit cell

The following describes how to make the electrolytic layer and assemble the unit cell using the solution of proton conductive material.

First, the gas diffusion layers and catalyst layers are hot pressed (150°C, 20kgf/cm2, 10sec) and combined into two laminations. It is required to set the size of the laminations beforehand so that one of them has a larger area than the other.

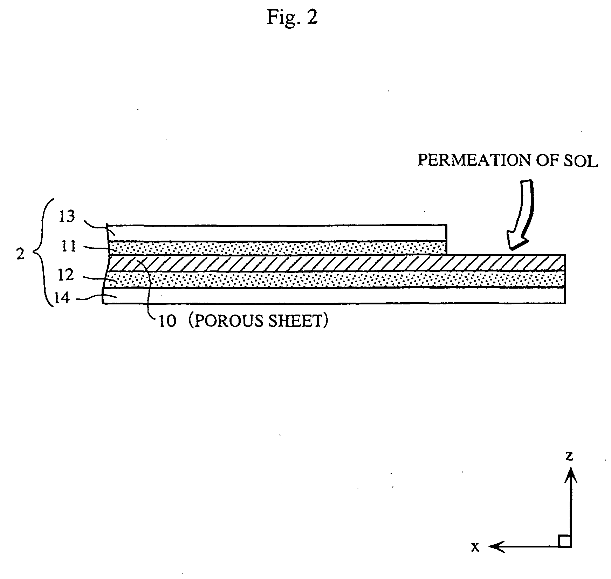

Then, the two laminations are set at their places so that their catalyst layers face with each other. A porous sheet, 50 µm thick, is inserted between the laminations which makes a frame of the electrolytic layer. The thickness of the porous sheet may vary from 10 µm to 100 µm, but the porous sheet should be of the same size as the larger lamination. Then, they are put together so that an end of the porous sheet is beyond those of the laminations, as shown in a partial cross sectional view of Fig. 2.

The porous sheet is made from a non-electronic conductive material selected from the group consisting of glass, ceramic and resin. More preferably, the porous sheet should be made from a proton conductive material (e.g. a compound of silicon oxide containing phosphoric acid), as in the case of an electrolytic gel.

With the two laminations and porous sheet set in such a position, an electrolytic gel membrane is formed by sol-gel method. As shown in the sectional view of Fig. 2, the solution of a proton conductive material (sol) is applied to the porous sheet. The solvent permeates into the porous sheet and evaporates from the porous sheet and then from gas diffusion layer.

As seen from the above, the sol-gel method takes advantage of the condensation polymerization that occurs in the solution between silicon oxide and every alkoxide of phosphoric acid. The resulting proton conductive gel, in a solid form, has a plurality of minute pores (of an order of a few nm). Hydroxy groups are connected to the surface of the minute pores, which enable the formed gel to offer excellent proton conductivity.

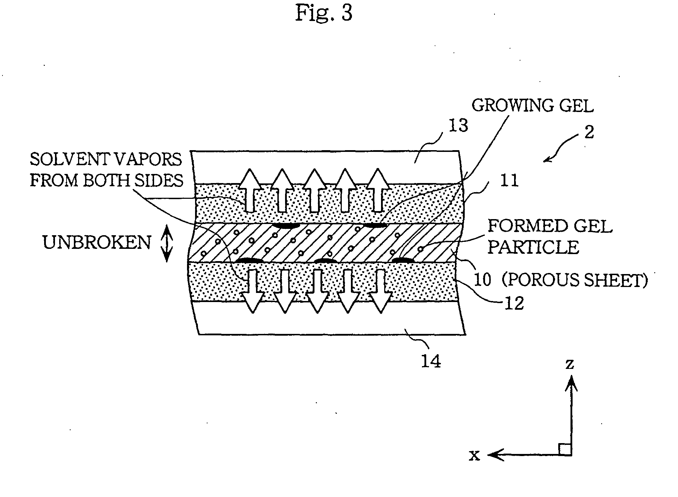

Fig. 3 is a sectional view of a substrate illustrating how the electrolytic gel membrane grows in the porous sheet. As shown herein, the solvent of the sol permeates into the catalyst layer, and then into the gas diffusion layer due to capillary attraction. The solvent permeates especially smoothly into the gas diffusion layer, because it is filled with carbon powder. The permeation of the solvent brings about condensation polymerization at the interface between the sol and the catalyst layers on both principal surfaces of the porous sheet. This expedites the growth of the electrolytic gel membrane. The solvent permeates into some portion where no electrolytic gel membrane is formed and accumulated.

Unlike conventional examples, the permeation and volatilization of the solvent take place uniformly both at the sol and the substrate (upwardly and downwardly as shown in Fig. 3). This means that a sol comes under a uniform tension when volume shrinkage occurs. Having such a compact structure, the resulting electrolytic gel membrane is less tending to the formation of cracks.

The pores in the gas diffusion layer are so small, 10-100nm in diameter, that the gel does not permeate into the gas diffusion layer but stays inside the porous sheet. This makes it possible to form an excellent electrolytic gel membrane, without the gas diffusion property of the layer being destroyed.

The resulting electrolytic gel is aired for a predetermined period of time at room temperature, and provided in the form of layers.

According to this manufacturing method, large-size, thin and uniform thickness electrolytic layers are produced. Also, unlike conventional methods, there is no need to remove a formed weak gel membrane from the substrate. Moreover, there is an increase in yield with the electrolytic layers being produced in layers.

### 2-5. Modification of the Manufacturing Method for Electrolytic Gel Membranes

The porous sheet for the electrolytic layer is not an essential component in the present invention. For example, an electrolytic gel membrane can be formed by applying a sol (a) containing a proton conductive material to a porous substrate (that has a greater number of minute pores, 10-100nm, than those of the porous sheet), so that a solvent vapors from both of the surfaces of the sol (a) at the same rate. In a resulting electrolytic gel membrane, there are fewer numbers of cracks than in conventional ones. Even when this electrolytic gel membrane is removed from the substrate and used separately as an electrolytic layer, the same effect of the present invention can be obtained (or rather, it can offer greater generation efficiency). Since the gel is more easily broken than the porous sheet, it is preferable here to use a lamination of a gas diffusion layer filled with carbon powder and a catalyst layer, instead of the porous substrate, and form an electrolytic gel membrane on the catalyst layer. This saves the need to remove the electrolytic gel from the substrate. The production yield can be improved by putting a pair of laminations consisting of an electrolytic gel, gas diffusion layer and catalyst layer, together so that the electrolytic gels come in face to face.

### 3. Examples

The following describes a plurality of actual examples of a unit cell made by the above manufacturing method. Their effective generation areas are 5cm×5cm=25cm².

### 3-1. Manufacturing Actual Examples

(Actual Example A): This is the same unit cell as that in the first embodiment, formed by the methods 2-1 to 2-4. As a proton conductive material for the porous sheet, silica gel containing phosphoric acid (which is a material made by the process 1-d, 2-3) is used.
(Actual Example B): This example is made in the same manner as the actual example A, except that a thickness of 50µm of silica-alumina ceramic fiber is used for a porous sheet.
(Comparison Example X): First, a gas diffusion layer of a conventional type is formed by heating a commercial carbon paper that is impregnated with 16wt% of FEP at 380°C for one hour. This makes it water repellent. Then, according to the conventional method as shown in Fig. 6, a sol of a proton conductive material is applied to a substrate permeable to the solvent (teflon sheet). After the sol becomes a gel, the resulting electrolytic gel membrane is joined with the catalyst layer and gas diffusion layer by hot pressing (150°C, 50kgf/cm², 2min).
(Comparison Example Y): This example is made in the same way as the actual example A, except that the gas diffusion layer is the same conventional-type layer as that used in the comparison example X.

### 3-2. Performance Evaluation Tests on the Actual Examples

Performance evaluation tests were conducted on the formed example cells A, B, X and Y under the following conditions.

### <Conditions of Unit cells Performance Tests>

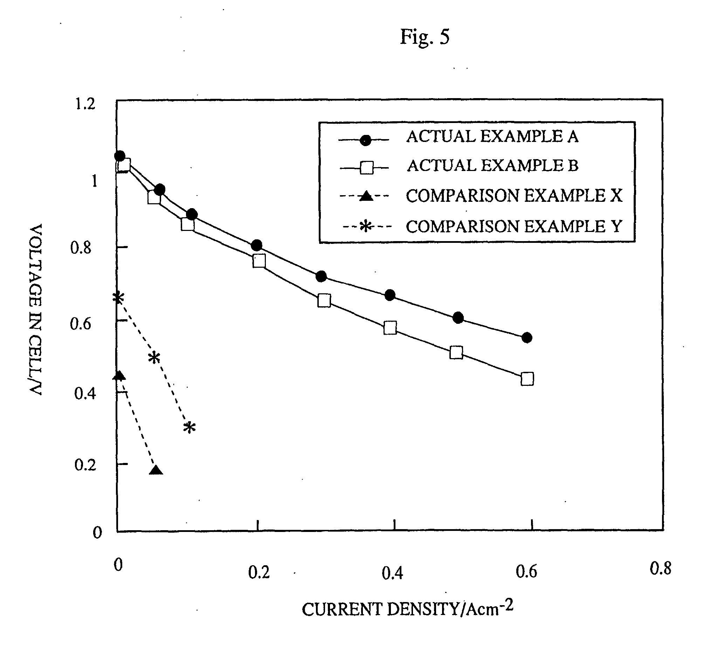

Fuel: hydrogen gas (no humidification)
Oxidizer: air (no humidification)
Operating temperature: 150°C
Results of the performance tests are given in the graph of Fig. 5.

### 3-3. Test Results

As shown in Fig. 5, the actual examples A and B exhibited greater generation efficiency than the comparison examples X and Y. This shows that the electrolytic layer of the present invention, which is formed by applying an electrolytic gel to a permeable porous sheet, can offer greater generation efficiency than conventional membranes.

The reason for the superior performance of the actual example A is that the porous sheet used for this actual example A was made of silica gel containing a proton conductive material, namely phosphoric acid, and that this material made it possible for the actual example A to maintain excellent proton conductivity.

On the other hand, the comparison example X showed a low voltage. Assumingly, this is because a plurality of cracks formed in the electrolytic gel membrane allowed the cathode-gas and anode-gas to pass through and mix with during the operation, having led to a reduction in generation efficiency.

The low cell voltage of the comparison example Y can be attributed to the use of gas diffusion layer that has no carbon powder filled in. Since the pores in the gas diffusion layer were larger in size than they are supposed to be, the gel passed through the pores while an electrolytic layer gel was being formed. This must have disrupted the gas diffusion property of the comparison example Y.

### 4. Second Embodiment

In the First Embodiment and Example, an electrolytic gel is formed with a proton-conductive solvent permeating into and vaporing from a gas diffusion layer. But the application of the present invention is not limited to such. For instance, the permeation and volatilization of the solvent may be performed on a catalyst layer.

To this end, the catalyst layers 11 and 12 have minute pores, 10-100nm wide, as shown in the sectional view of Fig. 3, and the catalyst layers are as thick as 50 µm. In general, catalyst layers have small pores, 2-3 µm to 20-30 µm in diameter, but they are not so small as to block the passage of an electrolytic gel. By reducing the pore diameters to 10-100nm, it becomes possible that only a solvent of a proton-conductive material is passed and volatilized to form an electrolytic gel. The electrolytic gel in the second embodiment can produce the same effect as in the first embodiment, in which the gas diffusion layers 13 and 14 are used.

### 5. Other Considerations

In the above embodiments, a compound of silicon oxide that contains phosphoric acid is cited as an example of a proton conductive material. But other compounds of silicon oxide may be used for this purpose if a compound capable of providing protons, such as phosphoric acid, perchloric acid, boric acid and silicic acid, is included in them.

Also, compounds that are proton conductive, such as Al₂O₃, TiO₂, V₂O₅ and ZrO₂, can be used instead of silicon oxide.

In the first embodiment, the gas diffusion layer is filled with carbon powder so that minute pores are formed in it. Instead of carbon powder, fine powder, including fine powder of metal, glass and ceramics can be used to produce the same effects. Nevertheless, it is the most preferable to use carbon powder, because carbon powder offers good electron conductivity and resistance to erosion, and is easy to set the particle diameter.

### 6. Third Embodiment

The following describes an application of a fuel cell, which is a third embodiment of the present invention.

### 6-1. Construction of a Unit cell

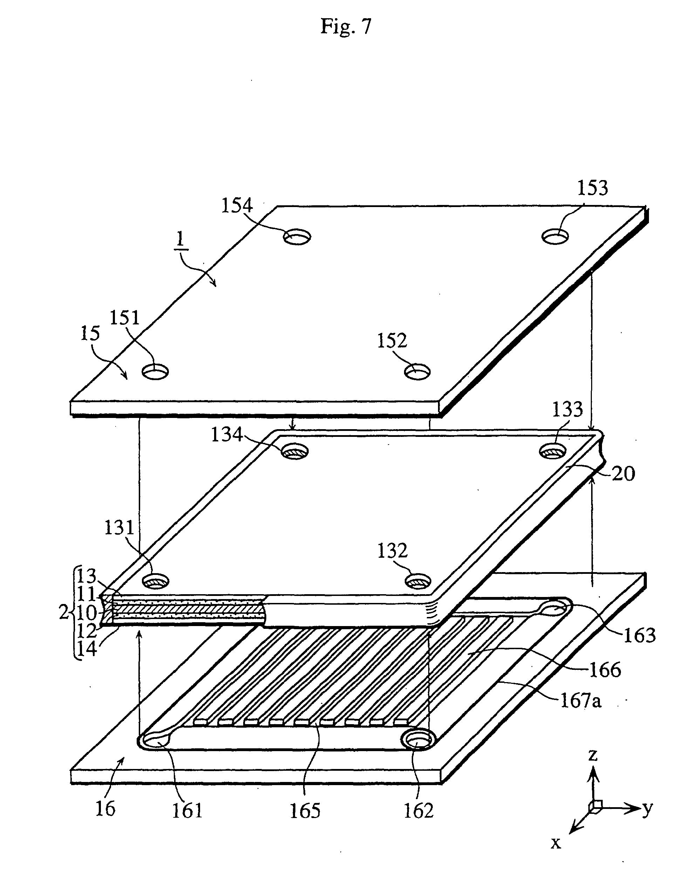

Fig. 7 is an assembly drawing of a fuel cell (including a view of a seal member 20 of a unit cell 2, with a portion broken away) in the third embodiment. As shown herein, the unit cell 1 is provided with a cathode-side channel plate 15 and an anode-side channel plate 16, with an electrolytic layer 10 sandwiched in between. The electrolytic layer 10 has a cathode-side catalyst layer 11 and a cathode-side gas diffusion layer 13 laminated on one surface, and an anode-side catalyst layer 12 and an anode-side gas diffusion layer 14 laminated on the other surface, in the stated order. Of these, construction elements 10-14 are combined into a lamination 2. The sizes of the principal surfaces of the construction elements 10-14 are predetermined as being almost the same.

The anode-side catalyst layer 12 and the cathode-side catalyst layer 11 are in the shape of a sheet and formed from a mixture of catalyst supporting powder (platinum supporting carbon powder) and PTFE.

The gas diffusion layers 13 and 14 are formed by applying a water-repellent resin (tetrafluoroethylene hexafluoropropylene copolymer, FEP) to a substrate, which is 200 µm thick (carbon paper). This makes it water repellent.

The gas diffusion layers 13 and 14 are also called collector layers, because they serve to ensure that electric currency pass through the catalyst layers 11-12 and the channel plates 15-16.

Note that generally a cathode is defined as being composed of the cathode-side catalyst layer 11 and the gas diffusion layer 13, and an anode as being composed of the anode-side catalyst layer 12 and the gas diffusion layer 14, to which the present embodiment comply with as well.

The anode-side channel plate 16 is formed by injection molding a mixture of carbon powder and a resinous material, such as phenol resin. Prallel ribs 166 are formed with some regular intervals on its surface facing the anode-side gas diffusion layer 14. They are arranged in the y direction, a direction orthogonal to x direction, when the x direction is a direction along the length. The intervals make channels 165 as a pathway for the anode gas (a purity hydrogen or a reformed gas containing ample hydrogen).

The cathode-side channel plate 15 is almost the same as the anode-side channel plate 16. Though not illustrated in Fig. 1, the cathode-side channel plate 15 has ribs on the surface facing the cathode-side gas diffusion layer 13 with some regular intervals. The ribs are arranged in the x direction, a direction orthogonal to the y direction, when the y direction is a direction along the length of this fuel cell. The intervals make channels as a pathway for the cathode gas (an oxidizer such as air).

The channel plates 15 and 16 are larger in size in the x and y directions than the lamination 2, so that their sides are situated more outwardly than the sides of the lamination 2.

The electrolytic layer 10 is formed of a ceramic porous sheet and a proton conductive gel impregnated therein. The proton conductive gel contains silicon oxide and Bronsted acid (phosphoric acid), with a high density of hydroxy group (OH-) chemically bonded with the silicon oxide on its end surface. The silicon oxide is supported by the Bronsted acid.

The porous sheet is a non-woven fabric made of ceramic fibers . The proton conductive gel is filled in its pores for the sake of physical protection. With this construction, fewer cracks are formed during manufacturing process than those in conventional ones. It does not matter whether this porous sheet is included or not, but the porous sheet should preferably be provided to strengthen the proton conductive gel.

The seal member 20 is situated so as to cover the side surfaces of the lamination 2, which is characteristic of the third embodiment. About the seal member 20, a detailed explanation will be given later.

The construction elements 10-16 have apertures (Fig. 1 illustrates apertures 131-134, 151-154, 161-163) at the four corners of a principal surface, forming manifolds in the unit cell 1. The anode-gas (fuel gas) comes through apertures 151, 131 and 161 and other apertures which are arranged in series, and proceeds in the z direction towards the channels 165. The anode-gas goes out from apertures 163, 133 and 153 and other apertures which are arranged in series in the z direction. Similarly, the cathode-gas (oxidizing gas) comes through the apertures 134 and 154 and other apertures which are arranged in series, and proceeds in the z direction towards the channels of the cathode-side channel plate 15. The cathode-gas goes out from apertures 162, 132 and 152 and other apertures which are arranged in series in the z direction.

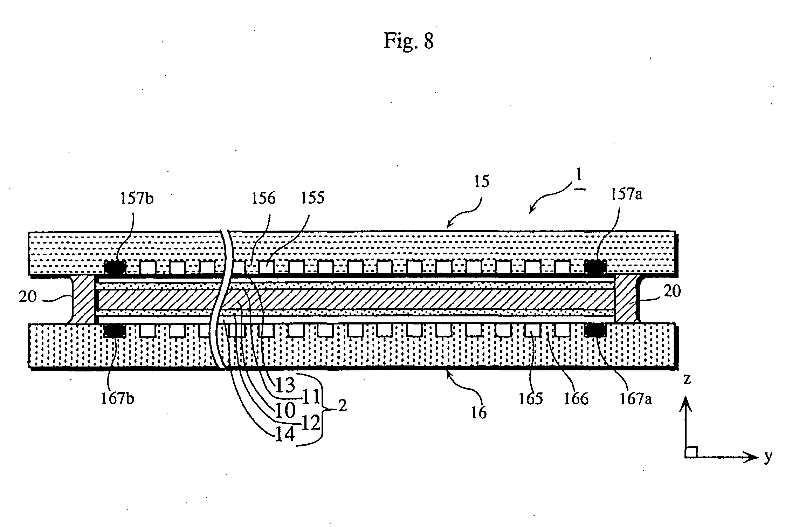

An elastic rubber packing 167a (157a, in Fig. 8) is provided between the cathode-side channel plate 15 (anode-side channel plate 16) and the lamination 2 so as to surround the sides of the principal surface.

To ensure high power generation, a plurality of cells 1 are stacked one against another, which are each sandwiched by a pair of partition plates. Both ends of the cell are fixed by means of a pair of end plates. Such a cell structure is called cell stack. It is preferable that in such a cell stack, the packings 167a and 157a are arranged on the both surfaces of the cathode-side channel plate 15 (anode-side channel plate 16) so that gas does not leak from the space between two adjacent unit cells 1.

### 6-2. Operation of the Fuel Cells

During the operation of the unit cell 1, a hydrogen gas (a reformed gas containing abundant hydrogen) as an anode gas and air as a cathode-gas are supplied. Hydrogen from the anode gas becomes a proton (H₂→2H⁺+2e⁻) when it arrives in the vicinity of the anode, and moves through the gel in the electrolytic layer towards the cathode-side catalyst layer 11. The proton combines with oxygen from the cathode gas to form water (2H⁺+2e⁻+1/2O₂→H₂O). Having such a proton conductive gel in its porous sheet, the fuel cell can generate power even when there is little water left in the electrolytic layer 10. In the proton conductive gel, protons of hydroxy groups of silicon oxide or phosphoric acid do hop together with the few water molecules to pass electric current. Such fuel cells can operate even in a dry atmosphere or at a high temperature, because the hydroxy groups and the little amount of water rarely leave a surface of the electrolytic layer 10. This feature is unique to this type of fuel cells, and not detected in PEFCs such as Nafion made by DU PONT. PEFCs require a lot of water to assume proton conductivity.

Fig. 8 is a sectional view, taken along the plane *yz*, of the lamination 2. As shown herein, seal members 20, which are the characteristic component of the third embodiment, are provided in a unit cell 1 so that it is in contact with the inner surface of the channel plate 15 and cover the side surfaces of the lamination 2. The side surfaces of the catalyst layers 11-12 and gas diffusion layers 13-14 are not exposed to air, which makes the lamination 2 a gastight compartment.

The seal member 20 is made from a proton conductive gel, the same material as that used for the electrolytic layer 10. After the channel plates 15-16 are set in a position to sandwich the lamination 2, the proton conductive gel is applied to the side surfaces of the lamination 2 and it is cured.

In this embodiment, such seal members 20 prevent the gases flowing through the manifolds from escaping out of the openings at the side of the lamination 2.

### 6-3. Detailed Description of the Seal Members

A typical fuel unit cell has an electrolytic layer with electrodes (catalyst layers and gas diffusion layers) and channel plates for distributing gases on each principal surface. For the conventional PEFCs, packings are provided between a principal surface of an electrolytic layer and a principal surface of a channel plate, as shown in a sectional view illustrating a portion of conventional layers (Fig. 13). This is aimed at minimizing the leakage of a supplied gas.

However, it is not possible to provide the packings in the same way for the electrolytic layer as for the PEFCs made of the proton conductive gel, because it involves a risk that the vitreous membrane might be broken. To avoid the damage on the membrane, packings are arranged between a gas diffusion layer and a channel plate in some fuel cells, as shown in Fig. 12 illustrating a sectional view of a portion of a unit cell. With packings arranged in such a way, the intensity of a pressure added on the electrolytic layer can certainly be reduced, but this causes another problem that a gas can escape from openings loft on the sides of the gas diffusion layers and the catalyst layers (at the cathode-side and anode-side).

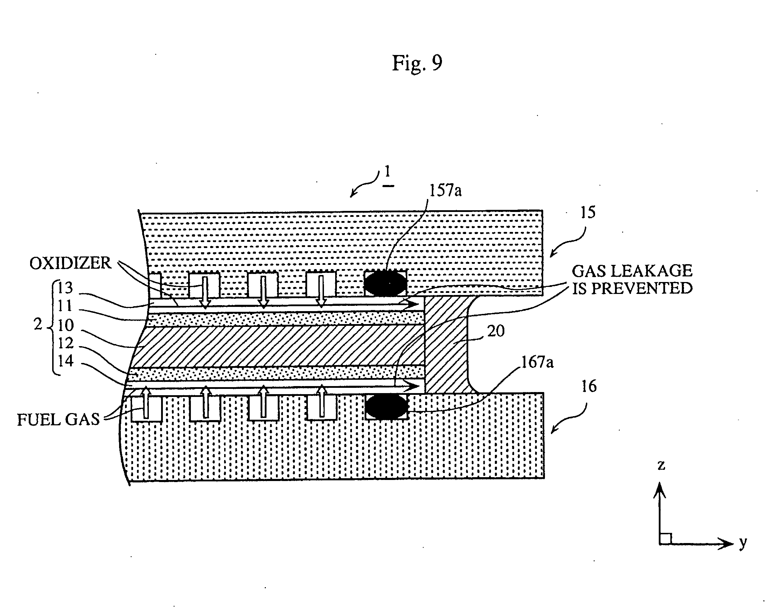

As a solution to such problems, the fuel cell in the third embodiment has seal members 20 at the side surfaces of the lamination 2, which is composed of the electrolytic layer 10, catalyst layers 11 and 12, and the gas diffusion layers 13 and 14. All of the lamination components are of the same size. The seal members 20 are made of proton conductive gel, the same material as that for the electrolytic layer 10. This incredibly gastight material is provided in contact with the gas permeable catalyst layers and gas diffusion layers, as shown in the sectional view of a fuel cell in Fig. 9. This helps prevent a gas leakage effectively and improve the efficiency of power generation.

But it is not essential that the seal members 20 prevent leakage of the anode-gas and cathode-gas. Unless a cathode-gas (oxidizer) leakage causes a major problem, which may occur when the cathode-gas is air, the seal member 20 may be provided at the side surfaces of the anode-side catalyst layer 12 and the anode-side gas diffusion layer 14.

### 7. Manufacturing the Fuel Cell (Lamination)

The following describes a method for manufacturing the layers of the unit cell.

### 7-1. Manufacturing the Gas Diffusion Layer

In the present invention, it is necessary that a solvent of the proton conductive gel should permeate into and vapor from the gas diffusion layer. For this purpose, the gas diffusion layer is provided with so minute pores, about 10nm to 100nm wide, that particles of the proton conductive material solution cannot get through.

Firstly, a carbon paper impregnated with 16wt% of FEP is heated at 380°C for an hour to make it water repellent. A pasted mixture of carbon particles (having an average diameter of about 30mm) and PTFE is applied (at a ratio of 60wt% to 40wt%) to both surfaces of the carbon paper to fill the inside of the carbon paper. The carbon paper is then heated at 360°C for two hours. As a result, the resulting gas diffusion layer has minute pores of about 10nm to 100nm in diameter.

The gas diffusion layer may also be formed by mixing carbon particles and fluororesins such as PTFE with a ratio of 70wt% to 30wt%, and by rolling the mixture into a sheet-like form of about 100 µm thick.

### 7-2. Manufacturing the Catalyst layer

The catalyst layer (an electrode) is formed by mixing platinum supporting carbon powder with PTFE, with a ratio of 70wt% to 30wt%, into a sheet of a thickness of 20 µm.

### 7-3. Making a Solution of a Proton Conductive Material

The following describes how to make a solution of a proton conductive material, which is used in forming the electrolytic layer.
1-a. Firstly, Si(OC₂H₅)₄ is mixed (hydrolised) with PO(OCH₃)₃, H₂O, C₂H₅OH and HCL (at a molar ratio of 1:0.04:1:1:0.0027).
1-b. Then, H₂O, C₂H₅OH and HCL (4:1:0.011: 1 Si(OC₂H₅)₄ mol) are added to the mixture, and they are stirred for an hour.
1-c. To the mixture, HCONH₂ is added as a gel inhibitor at a molar ratio of 12ml to 1 Si(OC₂H₅)₄ mol. They are stirred for an hour.
   As a result, the solution of a proton conductive material is produced. The solution can be transformed into proton conductive powder by taking the following process.
1-d. The solution is aired for a few days at room temperature (instead, the solution may be put in a dryhouse). The resulting lump is grinded with an agate mortar into proton conductive powder. Its particles have an average diameter of 1 µm.

### 7-4. Manufacturing a Unit cell

The following describes how to make the electrolytic layer and assemble the unit cell using the solution of proton conductive material.

First, the gas diffusion layers and catalyst layers are hot pressed (150°C, 20kgf/cm2, 10sec) and combined into two laminations. It is required to set the size of the laminations beforehand so that one of them has a larger area than the other.

Then, the two laminations are set at their places so that their catalyst layers face with each other. A porous sheet, 50 µm thick, is inserted between the laminations which makes a frame of the electrolytic layer. The thickness of the porous sheet may vary from 10 µm to 100 µm.

The porous sheet is made from a non-electronic conductive material selected from the group consisting of glass, ceramic and resin. More preferably, the porous sheet should be made from a proton conductive material (e.g. a compound of silicon oxide containing phosphoric acid), as in the case of an electrolytic gel.

With the two laminations and porous sheet set in such a position, the solution of a proton conductive material (sol) is applied to the porous sheet. The solvent permeates into the porous sheet and evaporates from the porous sheet and then from gas diffusion layer. With this, the condensation polymerization occurs in the solution between silicon oxide and every alkoxide of phosphoric acid. The resulting proton conductive gel, in a solid form, has a plurality of minute pores (of an order of a few nm). Hydroxy groups are connected to the surface of the minute pores, which enable the formed gel to offer excellent proton conductivity.

This process produces the lamination 2.

Then, the formed lamination 2 is sandwiched between the two channel plates 15 and 16. The solution of 1-c is applied to (and filled in) the side surface of the lamination 2, dried and formed into the seal member 20. It is preferable to determine the amount of the solution so that the complete seal member 20 has the same thickness as the gas diffusion layer (which is about 0.2mm).

The method of forming the seal member 20 is not limited to the above method. For example, the seal member 20 may be formed on a side of the lamination 2 before the lamination 2 is sandwiched between the channel plates 15 and 16.

### 8. Examples

The following describes a plurality of actual examples of a unit cell made by the above manufacturing method. Their effective generation areas are 5cm×5cm=25cm².

### 8-1. Manufacturing Actual Examples

(Actual Example A): This example is made in the same way as the unit cell in the first embodiment, formed by the methods 2-1 to 2-4. The porous sheet is made of silica gel containing phosphoric acid (which is a material made by the process 1-d, 2-3), which is proton conductive.
(Comparison Example X) : This example is made in the same way as the actual example A, except that it has no seal member 20.

### 8-2. Performance Evaluation Tests on the Actual Examples

Performance evaluation tests were conducted on the formed example cells A, B, X and Y under the following conditions.

### <Conditions of Unit cells for the Performance Tests>

Fuel: hydrogen gas (no humidification)
Oxidizer: air (no humidification)
Operating temperature: 150°C
Results of the performance tests are given in the graph of Fig. 5.

### 8-3. Test Results

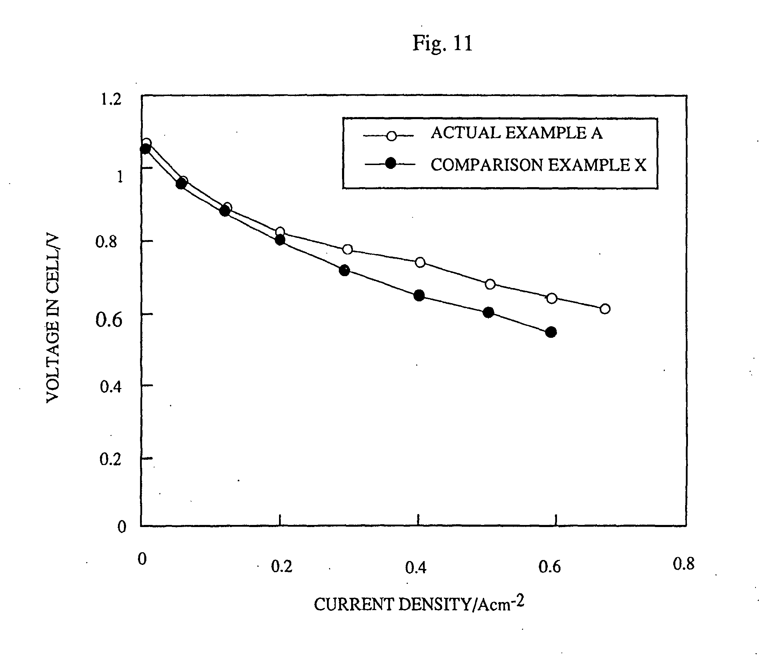

As shown in Fig. 11, the actual example A exhibited greater generation efficiency than the comparison example X. This shows that the use of the seal member 20 increased an efficiency at which a gas is used, and that power is generated with great efficiency.

### 9. Other Considerations

In the above embodiments, a compound of silicon oxide that contains phosphoric acid is cited as an example of a proton conductive material. But other compounds of silicon oxide may be used for this purpose if a compound capable of providing protons, such as phosphoric acid, perchloric acid, boric acid and silicic acid, is included in them.

Also, compounds that are proton conductive, such as Al₂O₃, TiO₂, V₂O₅ and ZrO₂, can be used instead of silicon oxide.

In the above embodiments, the seal members 20 are provided on the side surfaces of the anode-side and cathode-side gas diffusion layers. But the seal member 20 may be attached to either one of the gas diffusion layers. For instance, if the seal member 20 is positioned at an end portion of the anode-side gas diffusion layer, the efficiency of using H₂ gas can be increased and the cost can be reduced.

It is preferable that a seal member 20 is provided so as to surround the lamination 2, but the same effect can be obtained if the seal member 20 is attached to the side surfaces that are parallel to the gas pathway.

The seal member 20 can be made from materials other than the proton conductive gel. The seal member 20 may be formed from gas-tight materials, such as resinous materials, glass and ceramics.

Since the seal member 20 prevents a gas leakage effectively, it is no longer necessary to provide the packings 157a and 167a in the present invention. The positioning of those packings can be changed.

### INDUSTRIAL APPLICATION

The present invention is applicable to electrolytic layers for use in fuel cells.

## Claims

1. A fuel cell unit having an electrolytic layer with a catalyst layer and a gas diffusion layer arranged on each principal surface in the stated order, **characterized in that**:
the electrolytic layer is a porous sheet impregnated with an electrolytic gel, the electrolytic gel being gel particles made of a proton conductive material; and
at least one of the catalyst layer and the gas diffusion layer has pores that are smaller than the electrolytic gel particles.

2. The fuel cell unit of Claim 1,
wherein the proton conductive material includes (a) a material selected from the group consisting of SiO₂, Al₂O₃, TiO₂, V₂O₅ and ZrO₂, and (b) a material selected from the group consisting of phosphoric acid, perchloric acid, boric acid and silicic acid.

3. The fuel cell unit of Claim 1,
wherein the porous sheet is made of a proton conductive material whose strength is greater than that of the electrolytic gel.

4. A manufacturing method for forming an electrolytic gel for use in a fuel cell, **characterized in that**:
the electrolytic gel is formed by applying a solution containing a proton conductive material to a porous sheet.

5. The manufacturing method of Claim 4,
wherein the porous sheet has pores that are smaller than electrolytic gel particles.

6. A manufacturing method for manufacturing a fuel cell unit including a lamination step for laminating a catalyst layer and a gas diffusion layer, and an electrolytic gel layer forming step for forming an electrolytic gel layer by applying a solution containing a proton conductive material to the catalyst layer, **characterized in that**:
in the lamination step, at least one of the catalyst layer and the gas diffusion layer is made of a material that has smaller pores than the electrolytic gel particles; and
in the electrolytic gel layer forming step, the catalyst layer and the gas diffusion layer are laminated in the stated order on a formed electrolytic gel layer, to manufacture a cell unit.

7. A manufacturing method for manufacturing a fuel cell unit, **characterized in that**:
a porous sheet is inserted between two catalyst layers, and a gas diffusion layer is laminated on an outer surface of each catalyst layer, and
the porous sheet is impregnated with a solution containing a proton conductive material, so that an electrolytic gel is grown and held in the porous sheet.

8. The manufacturing method of Claim 7,
wherein at least one of the gas diffusion layer and the catalyst layer has pores that are smaller than the electrolytic gel particles that are formed from the solution.

9. The manufacturing method of Claim 7,
wherein a solvent of the solution in the porous sheet permeates into and vapors from the gas diffusion layer, the gas diffusion layer being composed of a substrate impregnated with carbon powder.

10. The manufacturing method of one of Claims 6-7,
wherein the proton conductive material includes (a) a material selected from the group consisting of SiO₂, Al₂O₃, TiO₂, V₂O₅ and ZrO₂, and (b) a material selected from the group consisting of phosphoric acid, perchloric acid, boric acid and silicic acid.

11. A fuel cell unit having an electrolytic layer that has a catalyst layer, a gas diffusion layer and a channel plate for distributing a gas laminated on each principal surface in the stated order, the fuel cell generating power when a fuel gas is distributed along one of the channel plates and an oxidizing gas is distributed along the other channel plate, **characterized in that**:
the electrolytic layer contains a proton conductive gel;
on at least one of the principal surfaces of the electrolytic layer, the catalyst layer and the gas diffusion layer are arranged so that their side surfaces are situated more inwardly than side surfaces of the electrolytic layer and the channel plates; and
a seal member is applied to a side surface of the gas diffusion layer, or two or more seal members are applied to the side surfaces of the catalyst layers and the gas diffusion layers.

12. The fuel cell unit of Claim 11,
wherein the seal member is applied to at least specific side surfaces of the catalyst layers and the gas diffusion layers that are parallel to a pathway of the fuel gas in the channel plate.

13. The fuel cell unit of one of Claims 11-12,
wherein the seal member is applied so as to cover the side surfaces of the catalyst layers and the gas diffusion layers.

14. The fuel cell unit of one of Claims 11-13,
wherein the seal member is made of a proton conductive gel.

15. The fuel cell unit of one of Claims 11-14,
wherein the proton conductive material includes (a) a material selected from the group consisting of SiO₂, Al₂O₃, TiO₂, V₂O₅ and ZrO₂, and (b) a material selected from the group consisting of phosphoric acid, perchloric acid, boric acid and silicic acid.

16. The fuel cell unit of one of Claims 11-15,
wherein the electrolytic layer is a porous sheet impregnated with the proton conductive gel.
